# EUROPEAN PATENT APPLICATION

(11) **EP 3 660 774 A1**
(43) Date of publication of application: **03.06.2020**
(21) Application number: 19210360.4
(22) Date of filing: 20.11.2019
(51) Int. Cl.: G06Q 30/06, G06Q 50/16, G06Q 30/02

(54) **REDEMPTION RATE DETERMINATION ENGINE**

(30) Priority: 27.11.2018 US 201816201712
(71) Applicant: Kognitiv Corporation, Waterloo, Ontario N2J 1P5 (CA)
(72) Inventor: Holleran, Jeffrey, Viera, FL Florida 32955 (US); Bowerman, Robert, Waterloo, Ontario N2K 4A3 (CA); Kacija, Mergim, Palos Park, IL Illinois 60464 (US); Monticelli, Angel Luis, 07008 Palma (ES); Schwartz, Peter John, Cambridge, Ontario N3H 4R8 (CA)
(74) Representative: Hanna Moore + Curley

(57) **Abstract**

An apparatus including a receiver receiving a redemption request from a member, a processor executing instructions stored in memory to cause the processor to gather data; resolve attribute conflicts based on a source prioritization that lists sources in a hierarchical order indicating that a source corresponding to a contract of the member has a highest priority; perform rate calculations based on the attributes to determine rates for the property; present the rates to the member in compliance with rate rules; receive an indication that the member desires to redeem points to obtain the property at one of the rates presented; deduct the points for the property at the one of the rates from a member's account for the property after confirmation that the member has a sufficient amount of the points to redeem; and a transmitter configured to instruct an external system to obtain the property for the member.

## Description

### BACKGROUND

A timeshare is a property with a divided form of ownership or use rights. The property is, for example, a resort condominium unit in which multiple owners hold a deeded interest. In many cases, each owner of the property is allotted a certain period of time to use the property (e.g., a specific week of the year).

A vacation club is an evolution of the traditional deeded timeshare market. In the vacation club, members will purchase a number of points that can be redeemed for a particular vacation. The amount of points needed to redeem a particular vacation from the vacation club can be based on, for example, fixed rates corresponding to room type and seasonality.

The market for vacation clubs has grown and the concept of the vacation club has evolved. Indeed, members of vacation clubs no longer want to be limited to the ability to use a single property. Rather, members want to be able to utilize different properties that afford additional choices in the type of vacation the member can take. To meet this need, various third-party vacation club exchanges have been developed.

Vacation club exchanges allow members to exchange time at their own property for time at a different property owned by someone else. As such, members of vacation clubs are given a level of flexibility and choice that was not previously provided to them.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram of a rate determination system including a server coupled to at least one external system through a network.
FIG. 2 is a schematic diagram of a computing device.
FIG. 3 is an embodiment of a flow diagram depicting implementation of a rate determination engine.
FIG. 4 is an embodiment of a source prioritization.
FIG. 5 is an embodiment of the attribute assignment.
FIG. 6 is an embodiment of a rate calculations.
FIG. 7 is an embodiment of the format of the points rules.
FIG. 8 is an embodiment of a payment terms screen/confirmation message sent to a member.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Instead of limiting members to the use of a single property within a specific vacation club or forcing members to seek the services of a third-party vacation club exchange, vacation clubs would prefer to offer their members flexibility in selection of where to vacation with access to additional properties within the club as well as properties outside the vacation club. However, doing so can be a difficult undertaking for a variety of reasons such as, for example, the conflicts that may exist between the contracts of an individual club member and the current program rules of a vacation club. Differences in currencies in use between the variety of vacation clubs currently in existence and vacation properties that are not a part of a vacation club make it difficult for a member of one club to make a reservation and payment for a vacation property outside of their own club.

Disclosed herein is a redemption rate determination engine that reconciles all of the different contractual benefits, perks, redemption rules, point systems, etc., associated with the member and/or the vacation clubs in order to present the member with a listing of perks and a contract-compliant redemption rate for the specific property expressed in vacation club points. As will be more fully described below, the rate determination engine ensures that the vacation club provides its members with their specific contractual benefits and perks, permits the vacation club to offer properties outside the vacation club to its members, and allows the vacation club to comply with the different redemption rules they have established for their memmbers. Moreover, the vacation club is able to conveniently offer additional items, upgrades, or other add-ons to its members.

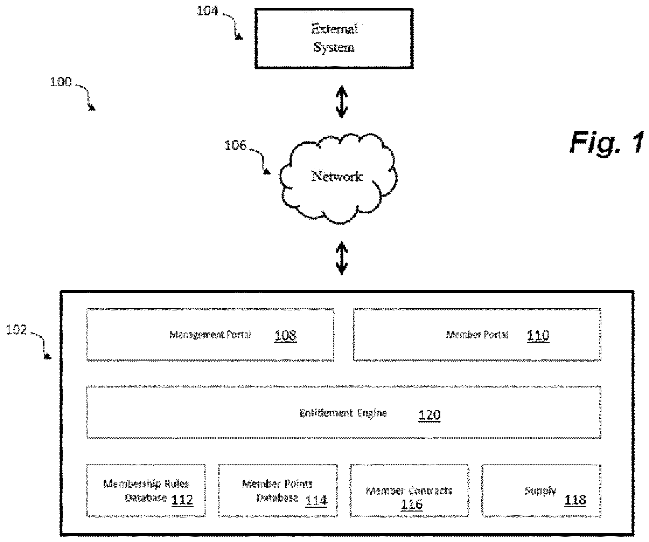

FIG. 1 is a rate determination system 100 including a server 102 coupled to at least one external system 104 through a network 106. In an embodiment, the server 102 is a vacation club server operated or managed by an administrator of a vacation club. The external system 104 represents, for example, the server of a hotel system, the server of a marketing system, the server of a reservations system, a calendar, a user device (e.g., smart phone, tablet, etc.) being operated by a vacation club member, or other sources of external data. While one external system 104 is depicted in FIG. 1, it should be appreciated that numerous sources of external data can be available and utilized in practical applications. The network 106 can be a public work such as the Internet, a private network, and so on. The server 102 and the external system 104 can be connected to each other through a wired connection, a wireless connection, or some combination thereof.

The server 102 includes a management portal 108, a member portal 110, a membership rules database 112, a member points database 114, a member contracts database 116, a supply database 118, and a rate determination engine 120 (a.k.a., an entitlement engine). The management portal 108 permits the administrator of the server 102 to input, view, manage, store, and extract data and information used in connection with the vacation club and its members. For example, the management portal 108 can be used by the administrator to input and store the membership rules of various vacation clubs, view the redeemable points accumulated or purchased by a particular member, input and store the contractual benefits of each member, view the status of a member's account, manage the type and number of rates offered to the member, view the supply of different properties that are currently available, and so on.

The member portal 110 permits a member of the vacation club to input, view, manage, store, and extract data and information used in connection with the vacation club and their membership. For example, the member portal 110 can be used by the member to view available properties, review and purchase points, view a calendar, make a reservation request, view the one or more rates presented in response to the reservation request, accept one of the presented rates, and so on.

The membership rules database 112 stores the various rules associated with the different vacation clubs. For example, a certain vacation club may offer a five percent discount to silver members, a ten percent discount to gold members, and a ten percent discount to platinum members. The membership levels and their associated discounts for that vacation club can be stored in the membership rules database 112. As another example, the membership rules in the membership rules database 112 might indicate that there is a points surcharge when the occupancy of a property is above a threshold (e.g., a hotel is more than eighty-five percent occupied). In an embodiment, the membership rules database 112 can be updated as membership rules are changed by the vacation clubs. The information stored in the membership rules database 112 is accessible to the administrator of the vacation club. In an embodiment, some or all of the information stored in the membership rules database 112 can be also be accessible to the member of the vacation club.

The member points database 114 stores the points of each member of the vacation club. Thus, the member points database 114 is like the member's bank account. The points contained within the member points database 114 can be organized by year. For example, the member points database 114 will indicate that the member still has one thousand points that can be redeemed in the current calendar year, and is entitled to redeem two thousand points in a future calendar year. The points contained within the member points database 114 can also be organized by type. For example, the member points database 114 may reveal that the member has a certain number of earned points, bonus points, points available for redemption, points previously redeemed, and so on. In an embodiment, the information stored in the membership points database 114 is accessible to the administrator of the vacation club as well as the member of the vacation club. The points stored in the member points database 114 may have been be purchased by the member, earned by the member, transferred to the member, awarded by the vacation club as a bonus, and so on. Each of the rules stored within the membership rules database 112 can be referred to as an attribute.

The member contracts database 116 stores the contractual entitlements of each member. The contractual entitlements, which may also be referred to herein as attributes, are all the perks, incentives, and extras that were included in member's contract to entice the member to join the vacation club. Examples of such contractual entitlements can include, but are not limited to, bonus points, membership level upgrade, free use of a rental car, bottles of wine, ticket or restaurant discounts, and so on. Indeed, the contract entitlements could be anything written into the member's contract as a line item addition in order to make the sale. The information stored in the member contracts database 116 is accessible to the administrator of the vacation club. In an embodiment, some or all of the information stored in the member contracts database 116 can be also be accessible to the member of the vacation club.

The supply database 118 stores a listing of all the properties accessible to the member as a member of the vacation club. The listing of properties can include the properties owned by the member's vacation club, properties owned by affiliated or partner vacation clubs, and properties owned by other third parties (e.g., hotels). Examples of such properties can include, but are not limited to, condominiums, hotel rooms, residential properties, vehicles (e.g., car, boat, motor home, etc.), and so on. The information stored in the supply database 118 is accessible to the member and the administrator of the vacation club. In an embodiment, the supply database 118 has a real-time connection to one or more external systems (e.g., the hotel's property management system, etc.). As such, the supply database 118 has access to and can presently store the lastest rates and availabilty for properties. In an embodiment, the supply database 118 can store the base redemption rates for each stored property and has the ability to connect to an external system 104 to obtain live availability information and rea-time details regarding the properties.

Each point of data or piece of information obtained from the external system 104 or contained within the membership rules database 112, the member points database 114, the member contracts database 116, and the supply database 118 can be referred to as an attribute. For example, the information obtained from the individual contract of a member may be referred to as member or user attributes. As another example, information obtained from the external system 104 can include hotel property attributes, brand attributes, occupancy attributes, and so on. In an embodiment, the information includes market pricing expressed in cash currency for properties external to the vacation club as well as the market rate for the vacation club itself, which can be used to show the member the value they are receiving.

As will be more fully explained below, the rate determination engine 120 is configured to perform a variety of different actions or steps upon receipt of a redemption request from a member of a vacation club in order to present the member with one or more alternative rates for booking the property during the specified time frame. The rate determination engine 120 is operably couple to, and in communication with, the management portal 108, the member portal 110, the membership rules database 112, the member points database 114, the member contracts database 116, and the supply database 118. In an embodiment, the rate determination engine 120 is implemented through software, hardware, or some combination thereof.

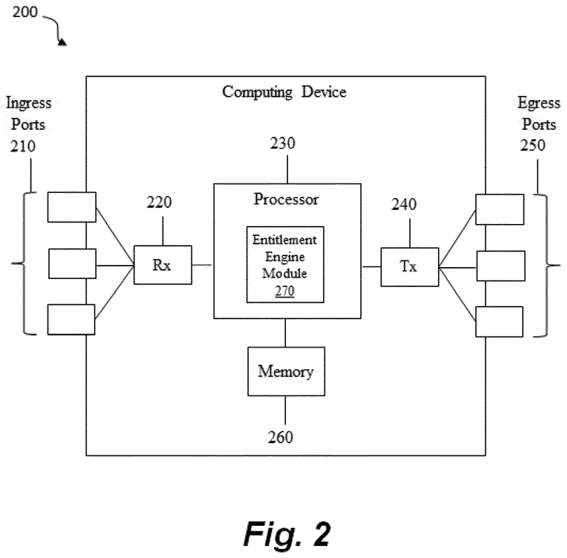

FIG. 2 is a schematic diagram of a computing device 200 (e.g., a server 102, an external system 104) according to an embodiment of the disclosure. The computing device 200 is suitable for implementing the disclosed embodiments as described herein. The computing device 200 comprises ingress ports 210 and receiver units (Rx) 220 for receiving data; a processor, logic unit, or central processing unit (CPU) 230 to process the data; transmitter units (Tx) 240 and egress ports 250 for transmitting the data; and a memory 260 for storing the data. The data may include, but is not limited to, the data received or transmitted via the management portal 108 or the member portal 110, the data written, stored, and read from the membership rules database 112, the member points database 114, the member contracts database 116, and the supply database 118, or the data processed by the entitlement engine 120.

The computing device 200 can also comprise optical-to-electrical (OE) components and electrical-to-optical (EO) components coupled to the ingress ports 210, the receiver units 220, the transmitter units 240, and the egress ports 250 for egress or ingress of optical or electrical signals.

The processor 230 is implemented by hardware and software. The processor 230 can be implemented as one or more CPU chips, cores (e.g., as a multi-core processor), field-programmable gate arrays (FPGAs), application specific integrated circuits (ASICs), and digital signal processors (DSPs). The processor 230 is in communication with the ingress ports 210, receiver units 220, transmitter units 240, egress ports 250, and memory 260. The processor 230 comprises an entitlement engine module 270. The entitlement engine module 270 implements the disclosed embodiments described herein. For instance, the entitlement engine module 270 implements, processes, prepares, or provides the various rates to the member. The inclusion of the entitlement engine module 270 therefore provides a substantial improvement to the functionality of the computing device 200 and effects a transformation of the computing device 200 to a different state. Alternatively, the entitlement engine module 270 is implemented as instructions stored in the memory 260 and executed by the processor 230.

The memory 260 comprises one or more disks, tape drives, and solid-state drives and can be used as an over-flow data storage device, to store programs when such programs are selected for execution, and to store instructions and data that are read during program execution. The memory 260 can be volatile and/or non-volatile and can be read-only memory (ROM), random access memory (RAM), ternary content-addressable memory (TCAM), and/or static random-access memory (SRAM).

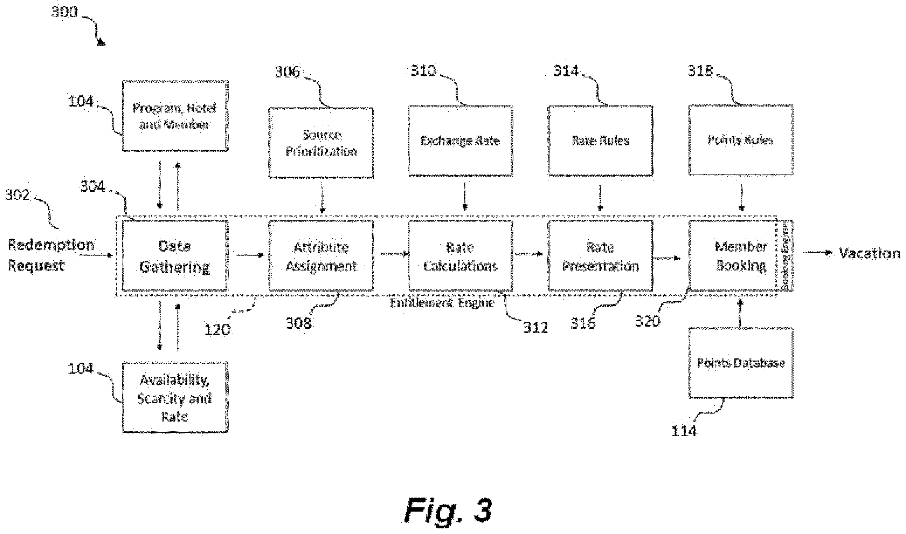

FIG. 3 is an embodiment of a flow diagram 300 depicting implementation of the rate determination engine 120. As shown, a redemption request 302 from a member of the vacation club is received by the rate determination engine 120. In an embodiment, the redemption request 302 is received via the member portal 110 and identifies the member, the property, and dates of use for the property. However, the redemption request 302 can contain other information as well.

In an embodiment, the redemption request 302 is a request by a member of the vacation club for an indication of the number of points needed to book a specific property on a specific date and/or the the perks that would be provided with that booking (a.k.a., for a rate presentation). In an embodiment, the redemption request 302 is a request by a member of the vacation club to redeem points to book the specific property on the specific date, despite the redemption rate not yet being known.

In response to the redemption request 302, the rate determination engine 120 performs a data gathering 304. During the data gathering 304, the rate determination engine 120 can obtain data from the membership rules database 112, the member points database 114, the member contracts database 116, the supply database 118 (collectively referred to as internal sources) as well as variety of different external systems 104. For example, the rate determination engine 120 can collect attributes of the vacation club program, the specific property, and the member. The rate determination engine 120 may also consult a reservation system, a marketing system, and a calendar (e.g., external sources outside the server 102) to obtain further attributes. In addition, the rate determination engine 120 may check the availability of the specific property, the scarcity of the specific property (a.k.a., the current occupancy level for the room type and dates), and the present cash rate of the specific property for even more attributes. Additional or different attributes may be gathered by the rate determination engine 120 in response to the redemption request 302 in practical applications.

Following the data gathering 304, the rate determination engine 120 uses a source prioritization 306 to perform an attribute assignment 308. In an embodiment, the administrator of the vacation club establishes the source prioritization 306. The administrator may do so using, for example, the management portal 108 of FIG. 1.

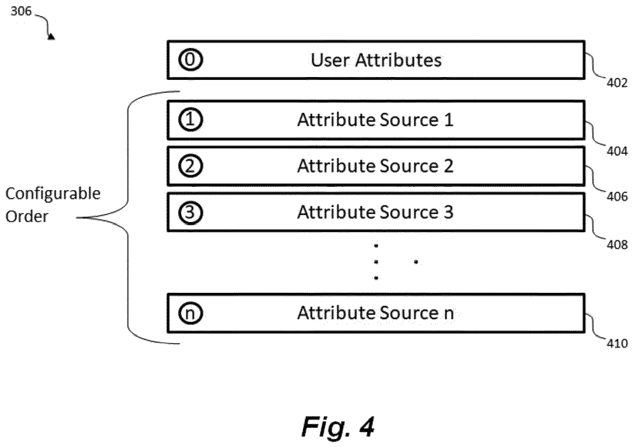

FIG. 4 is an embodiment of the source prioritization 306 of FIG. 3 in additional detail. As shown in FIG. 4, the various sources 402, 404, 406, 408, and 410 from which attributes are obtained are listed in a hierarchical order from zero (the highest priority) to n (the lowest priority). In an embodiment, the hierarchical order is predetermined or set by the administrator of the vacation club using the management portal 108 of FIG. 1.

In an embodiment, source 402, which includes the user attributes obtained from the member's contract, is assigned the highest priority to ensure that compliance with the member's contract exists. Thereafter, the priority of the remaining sources 404, 406, 408, and 410 is established in whatever order the administrator deems appropriate. For example, source 404, which might include attributes corresponding to the vacation club rules, can be assigned the next highest priority of one. Source 406, which might include attributes corresponding to the specific property, is given the next highest priority of two. Source 408, which might include attributes corresponding to a calendar, is given the next highest priority of three. Finally, source 410, which might include attributes corresponding to a loyalty program, can be assigned the lowest priority of n.

Due to the hierarchy depicted in FIG. 4, the user specific attributes of the member's contract take priority over, and will be applied before, the attributes from other sources. In an embodiment, the top priority position of source 402 is fixed (i.e., not configurable by the administrator of the vacation club) and only the order of the sources 404, 406, 408, and 410 is configurable by the administrator of the vacation club. In an embodiment, the administrator of the vacation club can use the management portal 108 to reconfigure or change the hierarchy of the source prioritization 306 from time to time.

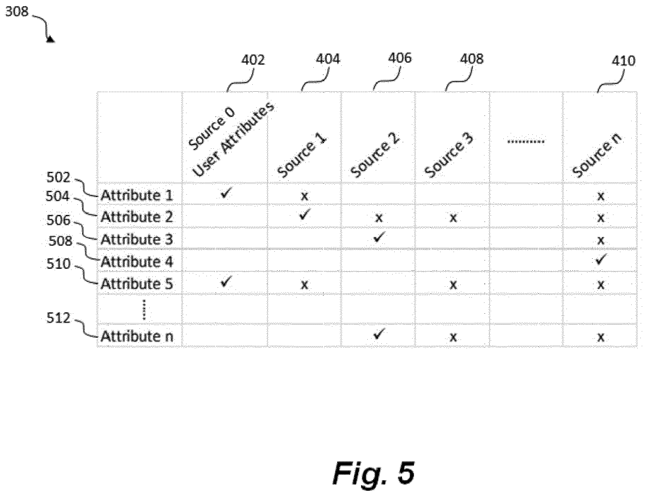

FIG. 5 is an embodiment of the attribute assignment 308 of FIG. 3 in additional detail. As shown in FIG. 5, the attribute assignment 308 (which may also be referred to as attribute selection) resolves any conflicts that exist between the attributes 502, 504, 506, 508, 510, and 512 of various sources 402, 404, 406, 408, and 410. The attribute assignment 308 is performed to ensure that the member of the vacation club receives all of their contractual entitlements, perks, bonuses, and so on.

As shown, during the attribute assignment 308, the sources 402, 404, 406, 408, and 410 are checked to determine whether they are able to satisfy or fill the various attributes 502, 504, 506, 508, 510, and 512. For example, the sources 402, 404,406,408, and 410 are examined to determine whether they are able to satisfy the first attribute 502. As represented by the "✔" and "x" designations in FIG. 5, both source 402 and source 404 are able to fill the first attribute 502. Because source 402 has a higher priority than source 404, source 402 is selected to provide the attribute, as represented by the "✔", and source 404 is ignored, as represented by the "x".

Thereafter, the sources 402, 404, 406, 408, and 410 are examined to determine whether they are able to satisfy the second attribute 504. As represented by the "✔" and the three "x" designations in FIG. 5, sources 404, 406, 408, and 410 are able to fill the second attribute 504. Because source 404 has a higher priority than sources 406, 408, and 410, source 404 is selected to provide the attribute, as represented by the "✔", and the source 406, 408, and 410 are ignored, as represented by the three "x" designations. This process continues until all attributes 502, 504, 506, 508, 510, and 512 have been considered.

In an embodiment, one of the attributes 502, 504, 506, 508, 510, and 512 may be derived from one or more of the other attributes 502, 504, 506, 508, 510, and 512. For example, a platinum member may be entitled to a ten percent discount, a gold member may be entitled to a five percent discount, and a silver member may be entitled to a two percent discount. Thus, the amount of the discount is derived based on the level of the particular member.

Referring back to FIG. 3, following the attribute assignment 308 process, the rate determination engine 120 performs one or more rate calculations. The rate determination engine 120 can use an exchange rate 310 to covert a value in monetary currency (e.g., dollars) to a value in non-monetary currency (e.g., vacation club points). In an embodiment, the exchange rate 310 can be set by the administrator of the vacation club using the management portal 108.

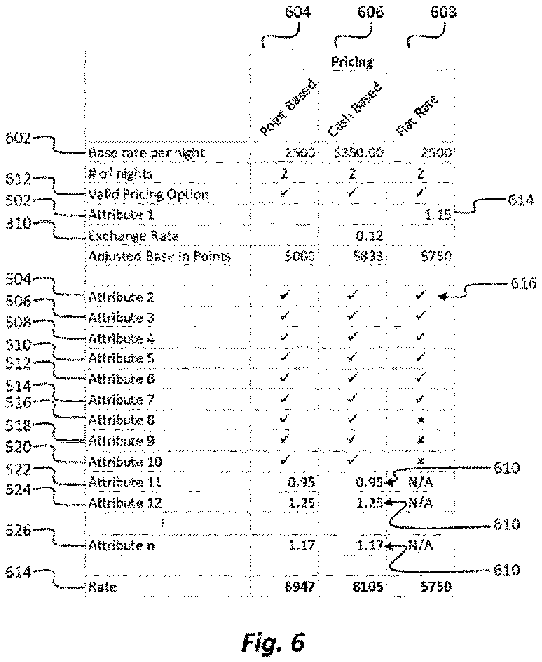

FIG. 6 is an embodiment of the rate calculations 312 of FIG. 3 in additional detail. As shown in FIG. 6, a base rate 602 is listed for a dynamic point based rate 604, a cash based rate 606, and a static flat rate 608. In order to convert the cash based rate 606 to vacation club points, the exchange rate 310 is applied to the cash based rate 606 (e.g., $110 / 0.01 = 11,000 points). Because the dynamic point based rate 604 and the static flat rate 608 are already expressed in vacation club points, the exchange factor 310 need not be applied. In an embodiment, the exchange rate 310 process is optional when all of the rates are already in the form of points (e.g., non-monetary currency format).

After the exchange rate 310 has been applied, various factors 610 corresponding to the attributes 522, 524, and 526 are applied to increase or decrease the dynamic point based rate 604 and the converted cash based rate 606. In an embodiment, the factors 610 are not applied to the static flat rate 608, but factor 614 corresponding to attribute 502 is applied. The factors 610 and 614 may be numerical (e.g., 1.10, 0.9, 0.88, etc.) or may correspond to the value of a perk. In an embodiment, the factors 610 and 614 can be set by the administrator of the vacation club using the management portal 108.

In an embodiment, an attribute can have a reconciled value that is a text field. That is, the attribute would not be a number used for pricing or a true/false for an entitlement, but rather some other value. For example, a club level of the member can be defined by how many points the member has (e.g., a derived value based on rules), but the member has a contract that says they will always be a platinum level (even if the points only suggest a gold level). In such a circumstance, the reconciled value for this attribute would be platinum based on the priority of the member contract source over the club membership source.

When one of the attributes does not call for an increase or decrease, the factor 616 may be set to one as represented by the "✔" or "x" designation. In an embodiment, an attribute can be recognized as true or false indicating whether or not the member is entitled to the perk that corresponds to the attribute. For example, attributes 504, 506, 508, 510, 512, 514, 516, 518, 520, 522, 524, and 526 correspond to the entitlement to specific perks for this request. In an embodiment, an attribute is able to block or prevent a rate from being considered, as represented by the "x" designation. For example, when one of the attributes reveals that the member has failed to timely pay membership dues, one or more of the rates may be blocked or prevented from being calculated. In the embodiment of FIG. 6, the point based rate 604, the converted cash based rate 606 and the static flat rate 608 are each a valid rate 612 as represented by the "✔" designation.

After each of the various factors 610 has been applied, a derived rate 614 is generated for each of the valid rates 612, which in FIG. 6 are the dynamic point based rate 604 and the converted cash based rate 606. As shown, application of the factors 610 to the dynamic point based rate 604 produces a derived rate 614 that is less than the derived rate produced by application of the factors 610 to the cash based rate 606.

Referring back to FIG. 3, following the rate calculations 312 process, the rate determination engine 120 uses rate rules 314 to determine a rate presentation 316. The rate rules 314 may dictate which of the valid rates will be presented to the member. For example, the rate rules 314 may dictate that only the point based rate 604 and the cash based rate 606 of FIG. 6 will be presented. In another case, the rate rules 314 may dictate that each of the point based rate 604, the cash based rate 606, and the static flat rate 608 of FIG. 6 will be presented. In yet another case, only the lowest rate is presented to the member. In an embodiment, the rate rules 314 can be set by the administrator of the vacation club using the management portal 108.

Once the rate rules 314 have been consulted and applied, the rate presentation 316 process presents the rates and/or the available perks to the member. In an embodiment, the rates and perks are presented to the member via the member portal 110 of FIG. 1. The rates and perks may be presented to the member by way of one of the external systems 104. For example, the rates and perks may be presented on the display of an electronic device, via an electronic mail message, as a text message, by way of an application (a.k.a., an app), and so on. Upon reviewing the rate presentation, the member may decide not to redeem points to obtain the property based on the rate or rates presented and/or the perks included. When that occurs, the member can make a new redemption request 302 with different parameters to obtain new rates and perks.

In an embodiment, the rate presentation 316 process may present a member with two different point totals and two different sets of perks based on a redemption request. For example, a member can be presented with a first option of one thousand vacation club points and three perks and a second option of two thousand vacation club points and five perks based on the redeption request. In an embodiment, the rate presentation 316 process may present a member with two of the same point totals but different sets of perks based on the same redemption request. For example, a member can be presented with a first option of one thousand vacation club points and three perks and a second option of one thousand vacation club points and five perks based on the same redeption request.

In an embodiment, two different members can make the same redeption request yet be presented with two different vacation point amounts and sets of perks based on, for example, the attributes of each particular member. For example, a first member is presented with a redemption rate of five hundred vacation club points and three perks and a second member is presented with a redemption rate of six hundred vacation club points and two perks based on the exact same redemptio request from both members.

When the rate presentation 316 yields one or more rates and perks that are desirable to the member, the member may decide to redeem their points to obtain the property according to opne of the options presented. The member can do so using one of the external systems 104 and the member portal 110. For example, the member can use the graphic user interface, a mouse, and keyboard of the member's personal computer to make their selection. As another example, the member can use the touch screen of their smart phone to make their selection.

When an indication that the member desires to redeem points for the property at one of the rates with associated perks, the rate presentation engine 120 consults the points rules 318 to determine whether the member has a sufficient amount of points available for redemption. The points rules 318 can be set by the administrator of the vacation club.

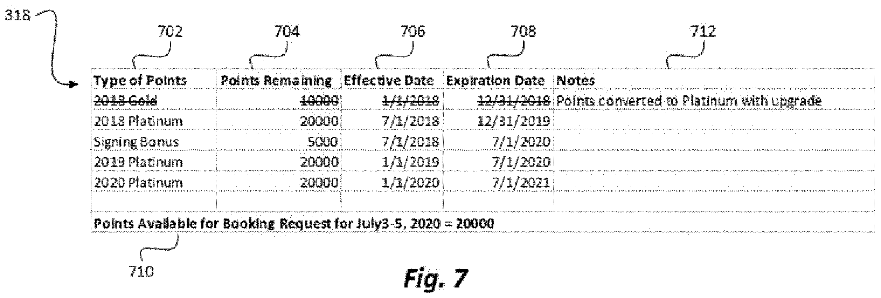

FIG. 7 is an example of the format that the points rules 318 can have. As shown, the points rules 318 indicate the type of points available 702, the amount ofpoints 704, the effective date of the points 706, and the expiration date of the points 708. The type of points available 702 column can reflect the number of points per calendar year, any bonus points, and so on. As shown by the points rules, only the normal 2018 points and the Bonus 1 points would be available for redemption by the member when the redemption request 302 of FIG. 3 was made on August 1, 2018. In an embodiment, the points rules 318 can also indicate the total or cumulative number of points 710 available for booking. In an embodiment, the points rules 318 are stored in the member points database 114. Also, it should be appreciated that different types of points rules 318 can be used in practical applications.

When the member does not have sufficient points, the rate presentation engine 120 can notify the member. Such notification can be made using one of the external systems 104 and the member portal 110. For example, a pop-up may be displayed on the member's personal computer or a warning might be displayed on the screen of the member's smart phone. In an embodiment, the member can be presented with an option to purchase additional points to complete the booking at one of the rates presented.

In an embodiment, the rate presentation 316 can provide the member with one or more rates that are redeemable and one or more additional rates that are not redeemable. For example, the member can be presented with two rates that are currently redeemable by the member based on the member's status, number of points, and so on, as well as a third rate that is not currently redeemable by the member based on the member's status, number of points, and so on. At this point, the member can be presented with an option to upgrade their membership, purchase additional points, etc., in order to make the third rate available to them.

In an embodiment, a filtering process may be implemented in connection with or following the data gathering 304 to determine which rates will be currently available to the member and which rates would be displayed to the member but not currently available. In an embodiment, when the member obtains additional points, upgrades their membership, etc., the rate presentation 316 can be revised accordingly to display additional options now available to or unlocked for the member.

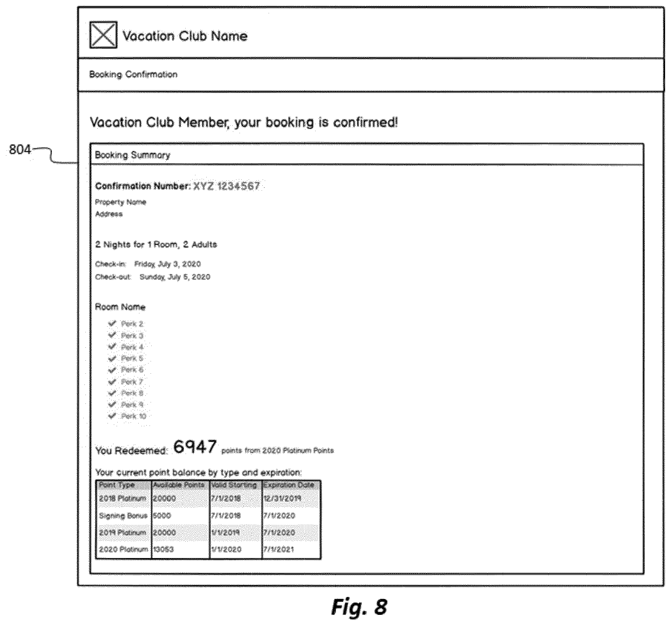

When the member has a sufficient amount of points, the rate presentation engine 120 implements the member booking 320. The member booking 320 decrements the appropriate amount of points from the member's account in the points database 114. The amount and/or type of points being used for the transaction can be displayed for the member using a payment terms screen/confirmation message 802 as shown in FIG. 8. The member booking 320 can also display for the member a current status of the member's points following the redemption.

The member booking 320 also executes the booking using a booking engine. For example, the member booking 320 contacts the hotel system (e.g., one of the external systems 104) and instructs the hotel to reserve the room (e.g., the property) for the member. The member booking 320 can also send payment terms screen/confirmation message 802 to the member to confirm the booking of the property. The payment terms screen/confirmation message 802 may be delivered to the personal computer or smart phone of the member via the member portal 110. The payment terms screen/confirmation message 802 includes the details of the booking, the member's current points balance, a listing of perks associated with the booking, and can include an option for the member to cancel the booking. Other information and details can be provided in practical applications.

From the foregoing, those skilled in the art will appreciate that the present disclosure, and in particular the rate determination engine 120, provides numerous benefits and advantages. For example, the present disclosure permits a membership club to process complex and conflicting contractual entitlements in conjunction with availability and scarcity inputs to determine a redemption rate for a member in compliance with the membership contract. The resulting rate includes any perks that are included in the offered rate based on the reconciliation of attributes from all sources. While the present disclosure has been described in the vacation club context, it should be appreciated that the concepts can be applied to different industries and used in different applications.

While several embodiments have been provided in the present disclosure, it should be understood that the disclosed systems and methods might be embodied in many other specific forms without departing from the spirit or scope of the present disclosure. The present examples are to be considered as illustrative and not restrictive, and the intention is not to be limited to the details given herein. For example, the various elements or components can be combined or integrated in another system or certain features can be omitted, or not implemented.

In addition, techniques, systems, subsystems, and methods described and illustrated in the various embodiments as discrete or separate can be combined or integrated with other systems, modules, techniques, or methods without departing from the scope of the present disclosure. Other items shown or discussed as coupled or directly coupled or communicating with each other be indirectly coupled or communicating through some interface, device, or intermediate component whether electrically, mechanically, or otherwise. Other examples of changes, substitutions, and alterations are ascertainable by one skilled in the art and could be made without departing from the spirit and scope disclosed herein.

## Claims

1. An apparatus, comprising:
a receiver configured to receive a redemption request from a member, the redemption request identifying the member, a property, and dates of use for the property;
a memory coupled to the receiver, the memory storing instructions;
a processor coupled to the memory, the processor configured to execute the instructions stored in the memory to cause the processor to:
gather data corresponding to the redemption request;
resolve any conflicts that exist between attributes available from various sources based on a source prioritization that lists the sources in a hierarchical order, the hierarchical order indicating that a source corresponding to a contract of the member has a highest priority;
perform rate calculations based on the attributes to determine one or more rates for the property;
present the one or more rates to the member in compliance with rate rules;
receive an indication that the member desires to redeem points to obtain the property at one of the one or more rates presented; and
deduct the points for the property at the one of the one or more rates from a member's account for the property after confirmation that the member has a sufficient amount of the points to redeem; and
a transmitter coupled to the processor and configured to instruct an external system to obtain the property for the member.

2. The apparatus of claim 1, wherein the data gathered pursuant to the redemption request is provided according to at least one of the following:
(i) wherein the data gathered pursuant to the redemption request is from at least one internal source and at least one external source;
(ii) wherein the data gathered pursuant to the redemption request is obtained from a membership rules database, a member points database, a member contracts database, a supply database, and an external system.

3. The apparatus of claim 1, wherein the source prioritization is set by an administrator of a vacation club.

4. The apparatus of claim 1, wherein resolution of the conflicts determines which of the sources is used to satisfy each one of the attributes.

5. The apparatus of claim 1, wherein the rate calculations are provided according to one or more of the following:
(i) wherein the rate calculations convert a monetary value to a non-monetary value based on an exchange rate;
(ii) wherein the rate rules prevent one of the one or more rates from being redeemed by the member without the member obtaining further points or upgrading a membership level.

6. A method of booking a property for a member of a vacation club implemented by a rate determination engine of a computing device, comprising:
receiving, by the rate determination engine, a redemption request from the member, the redemption request identifying the member, the property, and dates of use for the property;
gathering, by the rate determination engine, data corresponding to the redemption request from at least one system within the computing device and at least one system external to the computing device;
resolving, by the rate determination engine, any conflicts that exist between attributes available from various sources based on a source prioritization that lists the sources in a hierarchical order, the hierarchical order indicating that a source corresponding to a contract of the member has a highest priority;
performing, by the rate determination engine, rate calculations based on the attributes to determine one or more rates for the property;
presenting, by the rate determination engine, the one or more rates to the member in compliance with rate rules;
receiving, by the rate determination engine, an indication that the member desires to redeem points to obtain the property at one of the one or more rates presented;
deducting, by the rate determination engine, the points for the property at the one of the one or more rates from a member's account for the property after confirmation that the member has a sufficient amount of the points to redeem; and
instructing an external system to obtain the property for the member.

7. The method of claim 6, wherein at least one of the one or more rates presented to the member is unavailable for redemption due to a filtering process or without the member purchasing additional points or upgrading a membership level.

8. The apparatus of claim 1 or the method of claim 6, wherein at least one of the one or more rates is presented to the member along with one or more perks.

9. The method of claim 6, wherein resolution of the conflicts requires each attribute to be provided by a source having a highest priority for the source.

10. The apparatus of claim 1 or the method of claim 6, wherein the hierarchical order of the sources is configurable except for the source corresponding to the contract of the member.

11. The method of claim 6, wherein the source prioritization is set by an administrator of a vacation club prior to receipt of the redemption request from the member.

12. A computer program product comprising computer executable instructions stored on a non-transitory computer readable medium such that when executed by a processor, causes the processor to:
gather data corresponding to a redemption request received from a member, the redemption request identifying the member, a property, and dates of use for the property;
resolve any conflicts that exist between attributes available from various sources based on a source prioritization that lists the sources in a hierarchical order, the hierarchical order indicating that a source corresponding to a contract of the member has a highest priority;
perform rate calculations based on the attributes to determine one or more rates for the property;
present the one or more rates to the member in compliance with rate rules;
receive an indication that the member desires to redeem points to obtain the property at one of the one or more rates presented;
deduct the points for the property at the one of the one or more rates from a member's account for the property after confirmation that the member has a sufficient amount of the points to redeem; and
instruct an external system to obtain the property for the member.

13. The computer program product of claim 12, wherein the external system is also instructed to update a listing of available properties.

14. The computer program product of claim 12, further arranged according to one or more of the following:
(i) wherein resolution of the conflicts ensures that an attribute is provided by a source having a highest priority for the source, and wherein the one or more rates are presented along with one or more perks;
(ii) wherein one or more factors corresponding to the attributes are applied to increase or decrease the one or more rates presented to the member.

15. The computer program product of claim 12, wherein a value is assigned to a perk that the member is entitled to when the rate calculations are performed.
